(19) **Europäisches Patentamt**
**European Patent Office**
**Office européen des brevets**

(11) **EP 1 507 963 B1**

(12) **EUROPÄISCHE PATENTSCHRIFT**

(45) Veröffentlichungstag und Bekanntmachung des Hinweises auf die Patenterteilung:
**11.07.2007   Patentblatt 2007/28**

(21) Anmeldenummer: **03722419.3**

(22) Anmeldetag: **08.04.2003**

(51) Int Cl.:
*F01N 3/023* (2006.01)     *F01N 9/00* (2006.01)

(86) Internationale Anmeldenummer:
**PCT/EP2003/003641**

(87) Internationale Veröffentlichungsnummer:
**WO 2003/100227 (04.12.2003 Gazette 2003/49)**

(54) **VERFAHREN ZUR REGENERIERUNG EINES VERSTOPFTEN PARTIKELFILTERS**

METHOD FOR REGENERATING A CHOKED PARTICLE FILTER

PROCEDE POUR LA REGENERATION D'UN FILTRE A PARTICULES BOUCHE

(84) Benannte Vertragsstaaten:
**DE FR GB IT**

(30) Priorität: **25.05.2002   DE 10223427**

(43) Veröffentlichungstag der Anmeldung:
**23.02.2005   Patentblatt 2005/08**

(73) Patentinhaber: **Bayerische Motoren Werke Aktiengesellschaft**
**80809 München (DE)**

(72) Erfinder: **JÖRGL, Volker**
**A-2384 Breitenfurt (AT)**

(56) Entgegenhaltungen:
**EP-A- 0 349 788          EP-A- 1 103 702**
**US-A- 5 319 930**

- **PATENT ABSTRACTS OF JAPAN vol. 1996, no. 03, 29. März 1996 (1996-03-29) & JP 07 310524 A (NIPPONDENSO CO LTD;OTHERS: 01), 28. November 1995 (1995-11-28)**
- **PATENT ABSTRACTS OF JAPAN vol. 2003, no. 05, 12. Mai 2003 (2003-05-12) & JP 2003 003829 A (MITSUBISHI MOTORS CORP), 8. Januar 2003 (2003-01-08)**

## Beschreibung

Die vorliegende Erfindung betrifft ein Verfahren zur Regenerierung eines durch Asche und Ruß verstopften Partikelfilters einer Abgasanlage gemäß dem Oberbegriff des Patentanspruches 1.

Ein derartiges Verfahren ist aus der US 5,319,930 bekannt. Ein Verfahren zur Regenerierung eines Partikelfilters ist ferner aus der EP 1 103 702 A2 bekannt.

Moderne Fahrzeuge mit Dieselmotorantrieb weisen üblicherweise einen Diesel-Partikelfilter auf. Der Diesel-Partikelfilter ist dem Dieselmotor im Abgastrakt nachgeschaltet, um den durch unvollständige motorische Verbrennung anfallenden Ruß zurückzuhalten. Um eine völlige Verstopfung des Diesel-Partikelfilters durch Ruß zu verhindern, muss der Filter von Zeit zu Zeit "regeneriert" werden. Durch Veränderung der Einspritzbedingungen kann gezielt die Abgastemperatur vor dem Diesel-partikelfilter auf ein Temperaturniveau erhöht werden, das oberhalb der Zündtemperatur des im Diesel-Partikelfilter abgelagerten Rußes liegt. Der im Diesel-Partikelfilter abgelagerte Ruß brennt dann ohne Unterstützung durch einen Katalysator und bei ausreichendem freiem Sauerstoff im Abgas bei etwa 650°C nahezu vollständig ab. Durch Beimengung von Additiven bzw. metallhaltigen Substanzen in den Dieselkraftstoff gelingt es, die Zündtemperatur des Rußes auf ca. 450° bis 550°C abzusenken. Das Additiv wird bei jeder Betankung des Fahrzeuges in den Kraftstoff eingebracht.

Bekannte Diesel-Partikelfilter haben einen Abscheidegrad von mehr als 99 %. Ruß und unverbrennbare Aschen werden also nahezu vollständig aus dem Abgas herausgefiltert. Als nicht verbrennbare Ascherückstände lagern sich im Diesel-Partikelfilter folgende Substanzen ab:

- Alle Substanzen, die durch AbriebNerschleiß entstehen;
- metallhaltige Motorölaschen, die aus dem in geringen Mengen mitverbrannten Motoröl resultieren;
- Rückstände, die durch Beimengung von Kraftstoffzusätzen, wie z.B. Kaltstartbeschleuniger, Ventilreiniger etc. bei der Verbrennung entstehen;
- Cer-/Eisenhaltige Aschen, die bei der Verbrennung von Kraftstoffadditiven zur Absenkung der Filterabbrandtemperatur entstehen.

Mit steigender Kilometerleistung des Fahrzeuges sammelt sich im Diesel-Partikelfilter zunehmend mehr Asche an, die, wie der Ruß, den Diesel-Partikelfilter zunehmend verstopft, wodurch sich der Abgasgegendruck erhöht. Dies hat zur Folge, dass der Diesel-Partikelfilter nach einer gewissen "Laufstrecke" entweder ausgetauscht oder von der Asche gereinigt werden muss.

Die Aschemenge im Diesel-Partikelfilter hängt von mehreren Parametern ab, wie z.B. Ölverbrauch, Beimengung von Kraftstoffadditiven etc. Diese Parameter können nicht oder nur mit erheblichen Aufwand gemessen werden. Eine Abschätzung der im Diesel-Partikelfilter abgelagerten Aschemenge kann nach anmelderinternem Stand der Technik näherungsweise durch Aufsummierung der über die Motorsteuerung für die Absenkung der Rußabbrandtemperatur zudosierten Additivmenge erfolgen. Für eine näherungsweise Abschätzung der Aschemenge kann eine lineare Korrelation zwischen dem Additivverbrauch und der anfallenden Aschemenge aufgestellt werden. Eine Abschätzung der Aschemenge ist erforderlich, um die im Diesel-Partikelfilter befindliche Rußmenge abschätzen zu können.

Der "Strömungswiderstand" des Diesel-Partikelfilters hängt unmittelbar mit seinem Verstopfungsgrad zusammen. Der Verstopfungsgrad wiederum hängt vom Anteil der im Diesel-Partikelfilter abgelagerten Asche und vom Anteil des im Diesel-Partikelfilter abgelagerten Rußes ab. Durch Messung des Abgasgegendruckes vor dem Diesel-Partikelfilter kann zwar die "Gesamtverstopfung" gemessen werden. Es kann aber nicht zwischen den "Verursachern" Ruß bzw. Asche unterschieden werden.

Für eine optimale Steuerung der Regenierungsparameter, insbesondere der Regenierungsdauer und der Regenierungstemperatur ist eine möglichst exakte Kenntnis der im Diesel-Partikelfilter abgelagerten Rußmenge erforderlich. Der Strömungswiderstand, der durch die abgelagerte Asche verursacht ist, muss also "herausgerechnet" werden. Die Rußmasse ist nämlich einer der Hauptparameter für die Steuerung des Regenierungsvorgangs.

Bedingt durch Streuungen im Ölverbrauch, übermäßigen Verschleiß des Motors oder unkontrollierte Beimengung von metallhaltigen Kraftstoffzusätzen kann die Aschemenge in erheblichem Ausmaß streuen. Die oben erwähnte Abschätzung der Aschemasse in Abhängigkeit vom Additivverbrauch kann also zu deutlich fehlerhaften Ergebnissen hinsichtlich der berechneten Rußmenge führen. Insbesondere bei sehr langen Filterwechselintervallen und großen Motorlaufleistungen kann sich der Ölverbrauch deutlich erhöhen, was die Rußmengenberechnung sehr ungenau macht. Dies hätte wiederum negative Auswirkungen auf die Haltbarkeit des Diesel-Partikelfilters.

Aufgabe der Erfindung ist es, ein Verfahren anzugeben, das eine möglichst gute, d.h. möglichst vollständige Regenerierung des Diesel-Partikelfilters ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist die Erkenntnis, dass nach einer Regenerierung des Diesel-Partikelfilters der größte Teil des darin abgelagerten Rußes (mehr als 90 %) durch Verbrennung aus dem Diesel-Partikelfilter entfernt wird, wodurch sich sein Strömungswiderstand wieder verringert. Der Filter wird also "regeneriert".

Abgesehen von den konstruktiven Merkmalen des Diesel-Partikelfilters hängt sein Strömungswiderstand nach der Regenerierung primär von dem durch Asche hervorgerufenen Verstopfungsgrad ab, wobei die Asche auch nach einer Regenerierung im Diesel-Partikelfilter verbleibt.

Im Falle eines Diesel-Partikelfilters ohne Asche könnte durch Messung einer "Abgasdruckgröße", genauer gesagt eines Quotienten aus Abgasdruck und Abgasvolumenstrom, der Strömungswiderstand des Diesel-Partikelfilters bestimmt werden. Im Falle eines Diesel-Partikelfilters ohne Asche kann somit vom Strömungswiderstand auf die im Filter angesammelte Rußmenge geschlossen werden.

Das der Erfindung zugrunde liegende Grundprinzip besteht nun darin, nach der Regenerierung des Filters eine "Abgasdruckgröße" zu messen. Unter "Abgasdruckgröße" kann in diesem Zusammenhang der Druck vor dem Diesel-Partikelfilter bzw. der auf den Abgasvolumenstrom bezogene Druck vor dem Diesel-Partikelfilter verstanden werden. Die unmittelbar nach einer Regenerierung gemessene "Abgasdruckgröße" ist dann ein Maß für die im Diesel-Partikelfilter abgelagerte Aschemenge.

Wenn man die Aschemenge kennt, so kennt man auch den von der Aschemenge hervorgerufenen Strömungswiderstand des Diesel-Partikelfilters. Aus dem Gesamtströmungwiderstand des Diesel-Partikelfilter und dem durch abgelagerte Asche hervorgerufenen Strömungswiderstand kann somit auf den durch abgelagerten Ruß hervorgerufenen Strömungswiderstand bzw. auf die abgelagerte Rußmenge geschlossen werden.

Erfindungsgemäss wird die im Diesel-Partikelfilter abgelagerte Aschemenge nach Beendigung eines jeden Regenerierungsvorganges, beispielsweise alle 5.000 km, neu ermittelt oder dann, wenn die "Abgasdruckgröße" einen vorgegebenen "kritischen" Wert überschreitet. Je genauer man die tatsächlich im Diesel-Partikelfilter abgelagerte Rußmenge kennt, um so genauer können die "Regenierungsparameter", insbesondere die Regenerierungsdauer und die Regenerierungstemperatur gewählt werden, was eine Verlängerung der Lebensdauer des Diesel-Partikelfilters ermöglicht.

Nach der Erfindung wird die abgelagerte Aschemenge bzw. der dadurch hervorgerufene Verstopfungsgradanteil nach jeder Regenerierung redundant ermittelt und zwar durch eine Summierung folgender Größen, die unterschiedlich gewichtet werden können:

- Der bei der vorangegangenen Regenerierung als gültig angesehenen Aschemenge bzw. dem zuletzt als gültig angesehenen durch Asche bedingten Verstopfungsgradanteil;
- einem nach Abschluss der Regenerierung aus der Abgasdruckgröße abgeleiteten Korrekturwert für die Aschemenge bzw. dem dadurch hervorgerufenen Verstopfungsgradanteil und
- einem vorgegebenen laufleistungsabhängigen Sollwert für den durch Asche bedingten Verstopfungsgradanteil.

Im folgenden wird die Erfindung im Zusammenhang mit der Zeichnung näher erläutert. Es zeigen:

Figur 1    Die Anordnung des Diesel-Partikelfilters in der Abgasanlage; und

Figur 2    ein Diagramm der ermittelten Abgasmasse in Abhängigkeit von der Laufleistung des Motors.

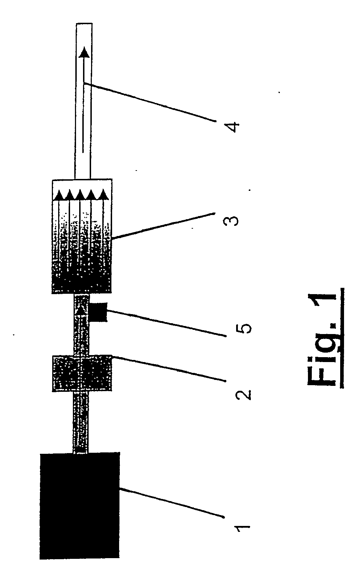

In Figur 1 sind unmittelbar hinter einem Motor 1 ein Katalysator 2 und ein Diesel-Partikelfilter bzw. ein "Rußfilter" 3 angeordnet. Der Pfeil 4 zeigt die Strömungsrichtung des Abgases an. Vor dem Eingang in den Diesel-Partikelfilter 3 ist ein Sensor 5 angeordnet, der eine Druck- und/oder Temperaturmessung des in den Diesel-Partikelfilter 3 eintretenden Abgases ermöglicht.

Der Diesel-Partikelfilter 3 verstopft allmählich durch abgelagerte Asche und abgelagerten Ruß. Der abgelagerte Ruß kann durch gezielte Erhöhung der Abgastemperatur "abgebrannt" bzw. oxidiert werden. Durch eine derartige "Regeneration" des Diesel-Partikelfilters 3 kann mehr als 90 % des abgelagerten Rußes entfernt werden. Durch die Regeneration verringert sich der Strömungswiderstand bzw. der Verstopfungsgrad des Diesel-Partikelfilters 3, wodurch der Gegendruck, der durch den Sensor 5 gemessen wird, sinkt.

Der nach einer Regenerierung tatsächlich gemessene Gegendruck hängt zum einen von der vorgegebenen Konstruktion des Diesel-Partikelfilters 3 ab und zum anderen von der im Diesel-Partikelfilter 3 abgelagerte Aschemenge, die durch eine Regeneration nicht entfernbar ist. Es ist also unvermeidlich, dass aufgrund der zunehmenden abgelagerten Aschemenge auch der Gegendruck von Regeneration zu Regeneration zunimmt.

Zur optimalen Steuerung der Regenerationsparameter, insbesondere der Regenerationsdauer und der Regenerationstemperatur ist eine möglichst exakte Kenntnis der im Diesel-Partikelfilter 3 abgelagerten Rußmenge erforderlich.

Die Regeneration muss sowohl hinsichtlich der Dauer als auch hinsichtlich der durchschnittlichen Filtereintrittstemperatur und der Austrittstemperatur so "gesteuert" werden, dass "reproduzierbar" der Diesel-Partikelfilter 3 nach der Regeneration vollständig von Ruß befreit ist. Unter "vollständig" ist hier ein Wert von mehr als 90 % zu verstehen, was im folgenden als "rußleer" bezeichnet wird.

Ist der Diesel-Partikelfilter 3 rußleer, so stellt sich in Abhängigkeit vom Abgasvolumenstrom ein gewisser Strömungswiderstand ein. Der Strömungswiderstand des Diesel-Partikelfilters 3 ist eine Funktion der darin abgelagerten Aschemenge und der darin abgelagerten Rußmenge. Im "rußleeren" Zustand kann die Aschemenge, die im folgenden mit $\alpha$ bezeichnet wird, sehr genau abgeschätzt werden. Die Aschemenge $\alpha$ wird nach jeder Regenerierung rechnerisch neu ermittelt. Formal ergibt sich die "Differenzaschemenge $\alpha_{Diff}$" zwischen der n-ten Regenerierung und der n+1-ten Regenerierung als:

$$\alpha_{Diff} = \alpha_{istneu} - \alpha_{korralt}$$

wobei $\alpha_{istneu}$ die Aschemenge nach der n+1-ten Regeneration und $\alpha_{korralt}$ die Aschemenge nach der n-ten Regeneration ist.

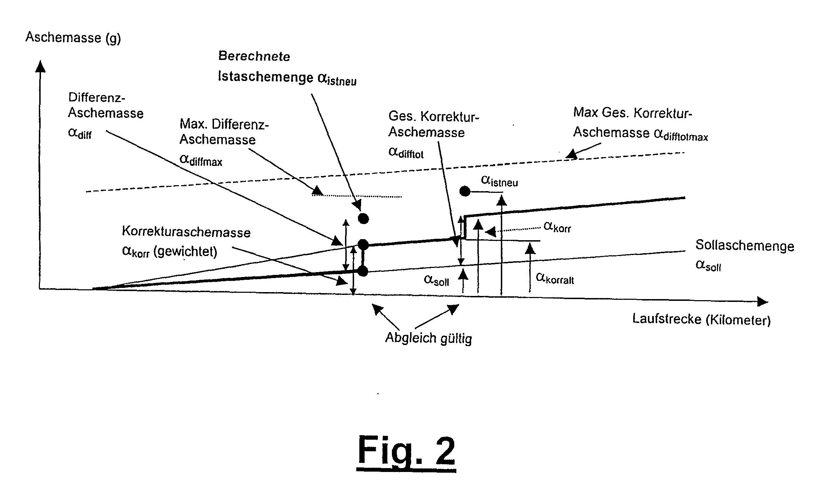

Im folgenden (vgl. Fig. 2) werden folgende weitere Variablen verwendet:

$\alpha_{Diffmax}$      Maximal zulässiger Korrekturwert pro Abgleich für die Aschemenge

$\alpha_{Difftotmax}$      Maximal zulässiger Korrekturwert (Gesamt)

$\alpha_{soll}$      Sollaschemenge gemäß Filterauslegung in Abhängigkeit von der "Laufstrecke"

Figur 2 zeigt den rechnerisch ermittelten Verlauf der im Diesel-Partikelfilter abgelagerten Aschemenge in Abhängigkeit von der "Laufstrecke" bzw. "Laufleistung" des Motors. Vor dem allerersten "Abgleich", d.h. vor der ersten Abschätzung bzw. Berechnung der Aschemenge wird der Wert $\alpha_{korralt}$ initialisiert und dabei gleich dem Wert $\alpha_{soll}$ gesetzt. Danach, d.h. nach der ersten Regenerierung bezeichnet $\alpha_{korralt}$ den letzten als gültig angesehen, über den Strömungswiderstand gemessenen und bereits korrigierten Wert für die Aschemenge. Dieser wird elektronisch in der Motorsteuerung gespeichert.

Da die Aschemenge außer im Fall einer Störung nicht sprunghaft zunimmt, dürfen bei der Korrekturberechnung, d.h. beim Abgleich der Aschemenge keine zu großen Sprünge zugelassen werden. Der rechnerischen "Korrektur" bzw. dem "Abgleich" der Aschemenge entsprechen in Figur 2 die beiden "Stufen" in der Aschemengenkurve. Wie aus Fig. 2 ersichtlich ist, wird bei jeder Regenerierung ein Wert $\alpha_{istneu}$ ermittelt, der dem nach der Regenerierung gemessenen Strömungswiderstand zugeordnet ist. Der Wert $\alpha_{istneu}$ wird jedoch nicht ohne weiteres gleich als die rechnerisch vorhandene Aschemenge angesehen. Diese wird vielmehr unter Berücksichtigung weiterer Größen ermittelt.

Bei der "Korrektur" der Aschemenge werden folgende Größen summiert und dabei unterschiedlich gewichtet:

- Der alte gemessene Wert $\alpha_{korralt}$;
- der Soll-Wert $\alpha_{soll}$;
- der Wert $\alpha_{istneu}$, der aus dem unmittelbar nach der Regeneration gemessenen Strömungswiderstand ermittelt wird.

Die abgeglichene Aschemenge (vgl. Fig. 2) kann nach folgender Formel berechnet werden.

$$\alpha_{korr} = (A * \alpha_{istneu} + B * \alpha_{korralt} + C * \alpha_{soll}) / (A+B+C).$$

Die Funktionen A, B, C können beispielsweise konstant oder Funktionen der Laufleistung sein. Die ermittelte Aschemenge $\alpha_{korr}$ wird beim Abstellen des Fahrzeugs in einem Speicher der Motorsteuerung gespeichert und beim nächsten Motorstart als $\alpha_{korralt}$ eingelesen. Wenn die Differenz aus $\alpha_{istneu}$ und der ursprünglich abgeschätzten Menge $\alpha_{soll}$ den Wert $\alpha_{difftotmax}$ überschreitet, so wird der Abgleich "eingefroren" und davon ausgegangen, dass ein Fehler bzw. eine Störung vorliegt.

Überschreitet $\alpha_{istneu}$ einen Wert $\alpha_{Diffmax}$ so wird der Abgleich ebenfalls eingefroren und davon ausgegangen, dass ein Fehler vorliegt. Dies deutet darauf hin, dass der Diesel-Partikelfilter sehr rasch durch Asche verstopft wurde, was auf eine Störung des Motors, Filters und/oder des Kraftstoffes hindeutet.

Bei der Durchführung des "Ascheabgleichs" sollten folgende Bedingungen erfüllt sein:

- Das Fahrzeug sollte eine gewisse Laufstrecke seit dem letzten erfolgreichen Abgleich zurückgelegt haben.

- Es sollte ein vorgegebener Betriebszustand, z.B. Autobahnfahrt, vorliegen. Das Vorliegen dieses Betriebszustands sollte für die Gesamtregenerationsdauer gegeben sein, um einen sicheren Abschluss des Abgleichs zu garantieren. Die Überprüfung, ob der Betriebszustand vorliegt, erfolgt durch Überwachung diverser Fahrzustandsparameter, wie der Abgastemperatur und/oder der Fahrzeuggeschwindigkeit.

- Der Strömungswiderstand des Diesel-Partikelfilter muss fehlerfrei berechnet werden können.

- Es darf kein Lesefehler beim Auslesen des Wertes $\alpha_{korralt}$ aus dem Speicher der Motorsteuerung vorliegen.

- Der Betriebszustand des Fahrzeuges muss einwandfrei ermittelt werden können.

- Die Abgastemperaturen vor dem Diesel-Partikelfilter müssen in einer bestimmten Höhe für eine vorgegebene Zeit vorliegen, so dass ein hinreichender Rußabbrand gewährleistet ist.

**Patentansprüche**

1. Verfahren zur Regenerierung eines durch Asche und Ruß verstopften Partikelfilters (3) einer Abgasanlage, bei dem der durch abgelagerten Ruß hervorgerufene Verstopfungsgradanteil des Partikelfilters (3) von Zeit zu Zeit durch Verbrennen eines Großteils der abgelagerten Rußmenge verringert wird und Verbrennungsparameter für einen Regenerierungsvorgang in Abhängigkeit von dem Verstopfungsgradanteil gewählt werden, welcher durch die im Rußfilter abgelagerte Aschemenge hervorgerufen ist, wobei der durch die abgelagerte Aschemenge hervorgerufene Verstopfungsgradanteil durch Messen einer Abgasdruckgröße ermittelt wird, die vor dem Rußfilter auftritt, **dadurch gekennzeichnet, dass** die abgelagerte Aschemenge ($\alpha_{korr}$) bzw. der **dadurch** hervorgerufene Verstopfungsgradanteil ermittelt wird und zwar durch gewichtete Summierung folgender Größen:

   - Einer zuletzt als gültig angesehenen Aschemenge ($\alpha_{korralt}$) bzw. einem zuletzt als gültig angesehenen Verstopfungsgradanteil;
   - einer nach der letzten Regeneration abgeschätzten Aschemenge ($\alpha_{istneu}$), welche aus der unmittelbar nach der letzten Regeneration gemessenen Abgasdruckgröße ermittelt wird und
   - einem vorgegebenen von der Laufleistung abhängenden Aschemengen-Sollwert ($\alpha_{soll}$).

2. Verfahren nach Anspruch 1, wobei die abgelagerte Aschemenge bzw. der **dadurch** hervorgerufene Verstopfungsgradanteil auf Basis einer Abgasdruckgröße ermittelt wird, die unmittelbar nach Beendigung des Regenerierungsvorganges vor dem Partikelfilter (3) auftritt.

3. Verfahren nach Anspruch 1 oder 2, wobei die Abgasdruckgröße ein auf den Abgasvolumenstrom bezogener Abgasdruck ist.

4. Verfahren nach einem der Ansprüche 1 bis 3, wobei die abgelagerte Aschemenge ($\alpha_{korr}$) nach folgender Formel ermittelt wird

$$\alpha_{korr} = (A * \alpha_{istneu} + B * \alpha_{korralt} + C * \alpha_{soll}) / (A+B+C).$$

5. Verfahren nach Anspruch 4, wobei A, B und C Konstanten sind.

6. Verfahren nach Anspruch 4, wobei A, B, C Funktionen der Laufleistung sind.

7. Verfahren nach einem der Ansprüche 1 bis 6, wobei die zuletzt als gültig angesehene Aschemenge ($\alpha_{korralt}$) vor Durchführung der ersten Regenerierung des Partikelfilters (3) gleich dem entsprechenden Sollwert ($\alpha_{soll}$) gesetzt wird.

8. Verfahren nach einem der Ansprüche 1 bis 7, wobei die Regenerierungsdauer in Abhängigkeit von der während der Regenerierung vorherrschenden Abgastemperatur und dem durch Asche hervorgerufenen Verstopfungsgradanteil des Partikelfilters (3) gewählt wird.

**EP 1 507 963 B1**

**Claims**

1. A method of regenerating a particle filter (3) in an exhaust system clogged by ash and soot, wherein the degree of clogging of the particle filter (3) due to deposited soot is periodically reduced by burning a major part of the deposited soot and combustion parameters for a regeneration process are chosen in dependence on the degree of clogging due to the ash deposited in the soot filter, wherein the degree of clogging due to the deposited ash is determined by measuring an exhaust-gas pressure in front of the soot filter, **characterised in that** the amount of deposited ash ($\alpha_{corrected}$) and/or the resulting degree of clogging is determined by weighted addition of the following quantities:

   - an amount of ash ($\alpha_{corrected-old}$) regarded as finally valid or a degree of clogging regarded as finally valid;
   - an amount of ash ($\alpha_{actual-new}$) estimated after the last regeneration and obtained directly from the exhaust pressure measured immediately after the last regeneration, and
   - a set amount of ash ($\alpha_{set}$) determined in dependence on the distance travelled.

2. A method according to claim 1, wherein the deposited amount of ash or the resulting degree of clogging is determined on the basis of an exhaust pressure in front of the particle filter (3) immediately after the end of the regeneration process.

3. A method according to claim 1 or claim 2, wherein the exhaust pressure is relative to the volumetric flow rate of exhaust gas.

4. A method according to any of claims 1 to 3, wherein the amount of deposited ash ($\alpha_{corrected}$) is determined by the following formula:

$$\alpha_{corrected} = (A * \alpha_{actual-new} + B * \alpha_{corrected-old} + C * \alpha_{set})/(A + B + C).$$

5. A method according to claim 4, wherein A, B and C are constants.

6. A method according to claim 4, wherein A, B, C are functions of the distance travelled.

7. A method according to any of claims 1 to 6, wherein the amount of ash ($\alpha_{corrected-old}$) last regarded as valid is equated with the corresponding set value ($\alpha_{set}$) before the first regeneration of the particle filter (3).

8. A method according to any of claims 1 to 7, wherein the duration of the regeneration process is chosen in dependence on the exhaust temperature during the regeneration and the degree of clogging of the particle filter (3) due to ash.

**Revendications**

1. Procédé pour la régénération d'un filtre à particules (3) d'un système de gaz d'échappement, obstrué par des cendres et de la suie, selon lequel on diminue de temps à autre le degré d'obstruction du filtre à particules (3) provoqué par la suie déposée par combustion d'une grande partie de celle-ci, et on choisit des paramètres de combustion pour une opération de régénération en fonction du degré d'obstruction provoqué par la quantité de cendres déposée dans le filtre à suie, **caractérisé en ce qu'** on détermine le degré d'obstruction, provoqué par la quantité de cendres déposée, par la mesure d'une grandeur de pression des gaz d'échappement, en amont du filtre à suie.

2. Procédé selon la revendication 1,

**caractérisé en ce qu'**
on détermine la quantité de cendres déposée ou le degré d'obstruction ainsi provoqué sur la base d'une grandeur de pression des gaz d'échappement, en amont du filtre à particules (3) immédiatement après la fin de l'opération de régénération.

**3.** Procédé selon la revendication 1 ou 2,
**caractérisé en ce que**
la grandeur de pression des gaz d'échappement est une pression des gaz d'échappement rapportée à leur débit volumique.

**4.** Procédé selon l'une des revendications 1 à 3,
**caractérisé en ce qu'**
on détermine la quantité de suie déposée ou le degré d'obstruction ainsi provoqué, notamment par l'addition pondérée des grandeurs suivantes :

- une quantité de suie considérée finalement comme valable ($\alpha_{korralt}$) ou un degré d'obstruction considéré finalement comme valable ;
- une quantité de cendres estimée après la dernière régénération ($\alpha_{istneu}$), déterminée à partir de la grandeur de pression des gaz d'échappement mesurée immédiatement après la dernière régénération ;
- une valeur de consigne prédéterminée de la quantité de cendres ($\alpha_{soll}$) dépendant de la durée de fonctionnement.

**5.** Procédé selon la revendication 4,
**caractérisé en ce qu'**
on détermine la quantité de cendres déposée ($\alpha_{korr}$) par la formule :

$$\alpha_{corr} = (A * \alpha_{istneu} + B * \alpha_{korralt} + C * \alpha_{soll}) \, / \, (A+B+C).$$

**6.** Procédé selon la revendication 5,
**caractérisé en ce que**
A, B et C sont des constantes.

**7.** Procédé selon la revendication 5,
**caractérisé en ce que**
A, B et C sont des fonctions de la durée de fonctionnement.

**8.** Procédé selon l'une des revendications 4 à 7,
**caractérisé en ce que**
la quantité de cendres considérée finalement comme valable ($\alpha_{korralt}$) est posée égale à la valeur de consigne correspondante ($\alpha_{soll}$) avant l'exécution de la première régénération du filtre à particules (3).

**9.** Procédé selon l'une des revendications 1 à 8,
**caractérisé en ce qu'**
on choisit la durée de la régénération en fonction de la température des gaz d'échappement régnant pendant la régénération et du degré d'obstruction du filtre à particules (3) provoqué par les cendres.

**10.** Procédé selon l'une des revendications 1 à 9,
**caractérisé en ce qu'**
on choisit la durée de la régénération de façon à brûler au moins 90 % de la suie déposée dans le filtre à particules (3).

**Fig. 1**

Aschemasse (g)

Berechnete
Istaschemenge $\alpha_{istneu}$

Differenz-
Aschemasse
$\alpha_{diff}$

Max. Differenz-
Aschemasse
$\alpha_{diffmax}$

Ges. Korrektur-
Aschemasse
$\alpha_{difftot}$

Max Ges. Korrektur-
Aschemasse $\alpha_{difftotmax}$

Korrekturaschemasse
$\alpha_{korr}$ (gewichtet)

$\alpha_{istneu}$

$\alpha_{korr}$

$\alpha_{korralt}$

$\alpha_{soll}$

Abgleich gültig

Sollaschemenge
$\alpha_{soll}$

Laufstrecke (Kilometer)

**Fig. 2**

9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5319930 A
- EP 1103702 A2